(19) Europäisches Patentamt

European Patent Office

Office européen des brevets

(11) **EP 0 569 662 B1**

(12) **EUROPÄISCHE PATENTSCHRIFT**

(45) Veröffentlichungstag und Bekanntmachung des Hinweises auf die Patenterteilung:
**30.10.1996 Patentblatt 1996/44**

(51) Int Cl.$^6$: **G01B 11/02**, B07C 1/16

(21) Anmeldenummer: **93101534.1**

(22) Anmeldetag: **02.02.1993**

(54) **Dickenmess-Verfahren**

Procedure for measuring thickness

Procédé de mesure de l'épaisseur

(84) Benannte Vertragsstaaten:
**BE FR GB IT**

(30) Priorität: **15.05.1992 DE 4216146**

(43) Veröffentlichungstag der Anmeldung:
**18.11.1993 Patentblatt 1993/46**

(73) Patentinhaber: **Licentia Patent-Verwaltungs-GmbH**
**60596 Frankfurt (DE)**

(72) Erfinder:
• **Zawatzki, Daniel, Dipl.-Ing.**
**W-7750 Konstanz (DE)**
• **Stamm, Peter, Dipl.-Ing.**
**W-7760 Radolfzell (DE)**

• **Zimmermann, Armin, Dipl.-Ing.**
**W-7750 Konstanz (DE)**

(74) Vertreter: **Vogl, Leo, Dipl.-Ing.**
**Licentia**
**Patent-Verwaltungs-G.m.b.H.**
**Theodor-Stern-Kai 1**
**60596 Frankfurt (DE)**

(56) Entgegenhaltungen:
**EP-A- 0 100 412        EP-A- 0 129 280**
**EP-A- 0 157 431**

• **PATENT ABSTRACTS OF JAPAN vol. 10, no. 74 (P-439)(2131) 25. März 1986 & JP-A-60 213 805**

**Beschreibung**

Die Erfindung betrifft ein Verfahren und eine Vorrichtung zur berührungslosen Dickenmessung von flachen Gegenständen, insbesondere in Briefverteilaniagen.

Bei Briefverteilanlangen mit einer großen Anzahl von Stapelfächern werden die codierten Sendungen nach der Abtastung über ein Deckbandsystem strangweise und weichengesteuert den entsprechenden Stapelfächern zugeführt Dabei ist, bedingt durch die endlichen Weichenumschlagzeiten, die Einhaltung einer Mindestlücke zwischen den einzelnen Sendungen erforderlich. Haben zwei oder mehr aufeinander folgende Sendungen die gleiche Zieladresse, so reicht diese Lücke zum sicheren Abstapeln in die Fächer nicht aus. Andererseits sind um ein möglichst hohen Durchsatz an Sendungen zu erreichen, die Lücken im Sendungsstrom entsprechend den Weichenumschlagzeiten, minimiert. Zwei aufeinanderfolgende Sendungen mit gleicher Zieladresse werden deshalb in einer Überlappungseinrichtung überlappt und zusammen in das Zielfach geschickt. Durch die Überlappung zweier Sendungen entsteht im Sendungsstrom zur dritten Sendung eine zum Abstapeln ausreichend große Lücke. Allerdings darf dabei, um einen störungsfreien Brieflauf zu gewährleisten, die Gesamtdicke der überlappten Sendungen nicht größer sein als die zulässige Dicke für Einzelsendungen. In einem entsprechenden Abstand vor der Überlappungseinrichtung muß daher die absolute Sendungsdicke gemessen werden, um zu ermitteln, ob eine Überlappung möglich ist oder nicht. Sendungen, die eine vorgegebene zulässige Dicke $D_{max}$ überschreiten, sollen identifiziert und ausgeschleust werden.

Bekannt sind bereits mechanische Dickenmeßverfahren, z. B. mit Abtasthebeln, die jedoch bei den hohen Transportgeschwindigkeiten von ca. 2,9 m/sec zu unerwünschten Schwingungen und Geräuschentwicklungen neigen. Bekannt sind auch diverse optische Abstandsmeßverfahren. Soweit bei ihnen, wie z. B. beim Triangulationsverfahren, die Dicke einer Sendung nur punktuell gemessen wird, werden dabei bauchige Stellen der Sendungen nicht miterfaßt, so daß die entsprechenden Sendungen nicht ausgeschleust werden,. Bekannt sind auch Schattenabbildungsverfahren, bei denen aus einer Lichtquelle ein weitestgehend paralleles Lichtband erzeugt wird, in dem sich der zu messende Gegenstand befindet und dabei die lichtempfindliche Fläche eines Empfängers verschattet. Soweit dabei ein Photowiderstand als Empfänger benutzt wird, ist sämtliche Information über den Dickenmeßwert der Sendung im Signalhub des Photowiderstands enthalten. Dies kann in mehrfacher Hinsicht zu Problemen führen: Zunächst läßt sich ein Dicken-Offset, der durch die Schattenbildung von Transportmittel wie Rollen oder Riemen im Lichtband entsteht, nicht von anderen Intensitätsschwankungen des in den Empfänger einfallenden Lichts unterscheiden. Ein solcher Dicken-Offset kann sich z. B. durch Dünnerwerden eines Riemens infolge von Verschleißerscheinungen oder durch Austausch von Transportelementen ändern. Andererseits ergeben sich Intensitätsunterschiede in gewissen Zeitabständen durch Staubablagerungen am optischen System, das den Lichtvorhang bildet. Diese Ablagerungen sind nicht homogen, so daß das Photowiderstandssignal eine gewisse unregelmäßige Welligkeit aufweist. Dies erfordert eine häufige Normierung des Systems, die jedoch während des Betriebs der Verteilanlage nur während solcher Zeitintervalle möglich ist, die großen Brieflücken entsprechen. Ausreichend große Brieflücken kommen jedoch wesentlich seltener vor als an sich erforderlich wäre. Außerdem kann bei starken Intensitätseinbrüchen nicht unterschieden werden, ob es sich dabei um eine kurze Verdickung in der Sendung oder um einen Fremdkörper im Lichtvorhang, z. B. einen Staubklumpen, handelt.

Aus dem Dokument Patent Abstracts of Japan, Vol. 10, Nr. 74 (P-439) [2131], 25 March 1986; Pub. No.: JP-A-60213805 ist bereits ein Verfahren zur berührungslosen Dickenmessung von flachen Gegenständen bekannt, bei dem die zu messenden Gegenstände in ein Band parallelen Lichts eingebracht werden und aus der von den Gegenständen jeweils erzeugten Verschattung der lichtempfindlichen Fläche einer CCD-Zeile die Dicke des jeweils zu messenden Gegenstands ermittelt. Aus der EP-A-0129280 ist eine optische Dickenmeßvorrichtung in einer Briefverteilanlage bekannt, bei der ein zu dicker oder zu steifer Brief eine Lichtschranke unterbricht und aussortiert werden kann. Die Transportvorrichtung für die zu messenden Gegenstände besteht aus Riemen und einer Meßrolle.

Aufgabe der Erfindung ist die Angabe eines Verfahrens und einer Vorrichtung zur berührungslosen Dickenmessung von flachen Gegenständen, die bei hoher Durchsatzgeschwindigkeit der zu messenden Gegenstände sicher arbeitet, mit kurzer Ansprechzeit und hoher Meßgenauigkeit. Die Aufgabe wird gelöst durch ein Verfahren gemäß Patentanspruch 1. Vorteilhafte Ausgestaltungen der Erfindung sind in den abhängigen Ansprüchen dargestellt. Die Erfindung wird im folgenden anhand von Zeichnungen beispielsweise näher erläutert. Es zeigen im einzelnen:

Figur 1    Teilansicht des Eingangsteils einer Briefverteilanlage

Figur 2    Seitenansicht der Vorrichtung in Figur 1

Figur 3    Vorderansicht der Vorrichtung in Figur 1

Figur 4    Übersichtsbild einer erfindungsgemäßen Vorrichtung

Figur 5    schematischer Aufbau des optischen Teils des Systems

Figur 6    Blockschaltbild der Dickenmeß-Elektronik einer erfindungsgemäßen Vorrichtung

Figur 7    Darstellung der Videosignalverarbeitung - Signal ohne Sendung

Figur 8    Steuerung des Meß-Zählers und Erzeugung des STROBE-Signals - Signal mit Sendung der Dicke d

Figur 9    Timing am Meßzähler für die ersten vier Zählstufen

Figur 10    Prinzip der Meßflanken-Verschiebung im Zählerergebnis - Datenbits DB1 bis DB5 - für eine Sendung mit Dickenänderung $\delta d = 1344\ \mu m$

Figur 11    Verhalten von SERVICE DUST - Signal ohne Sendung

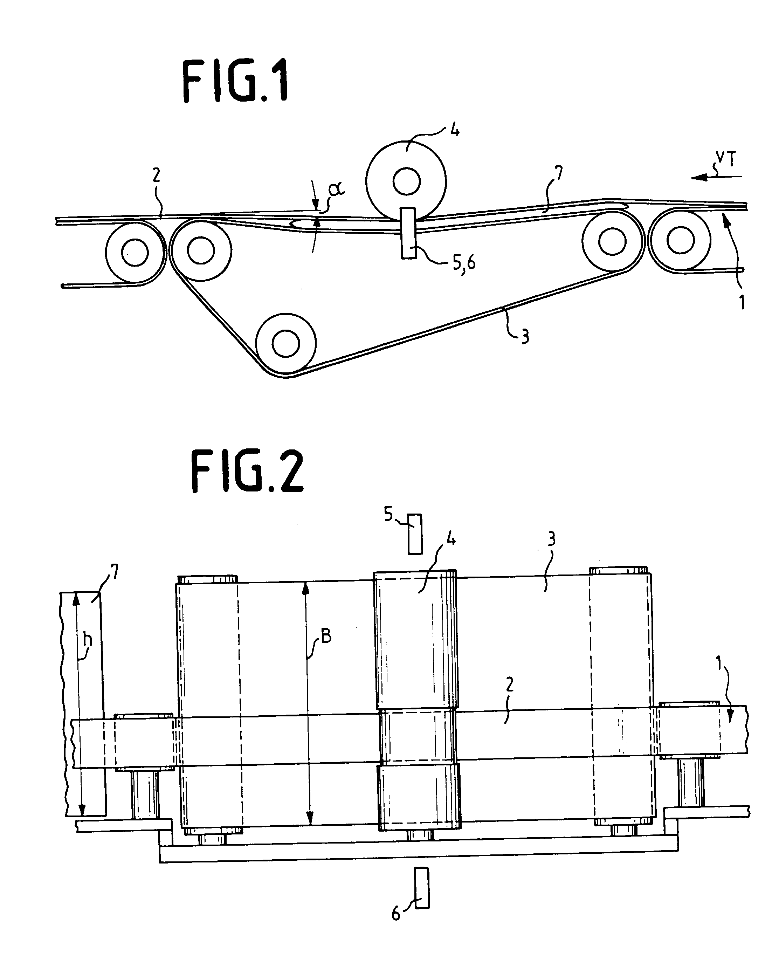

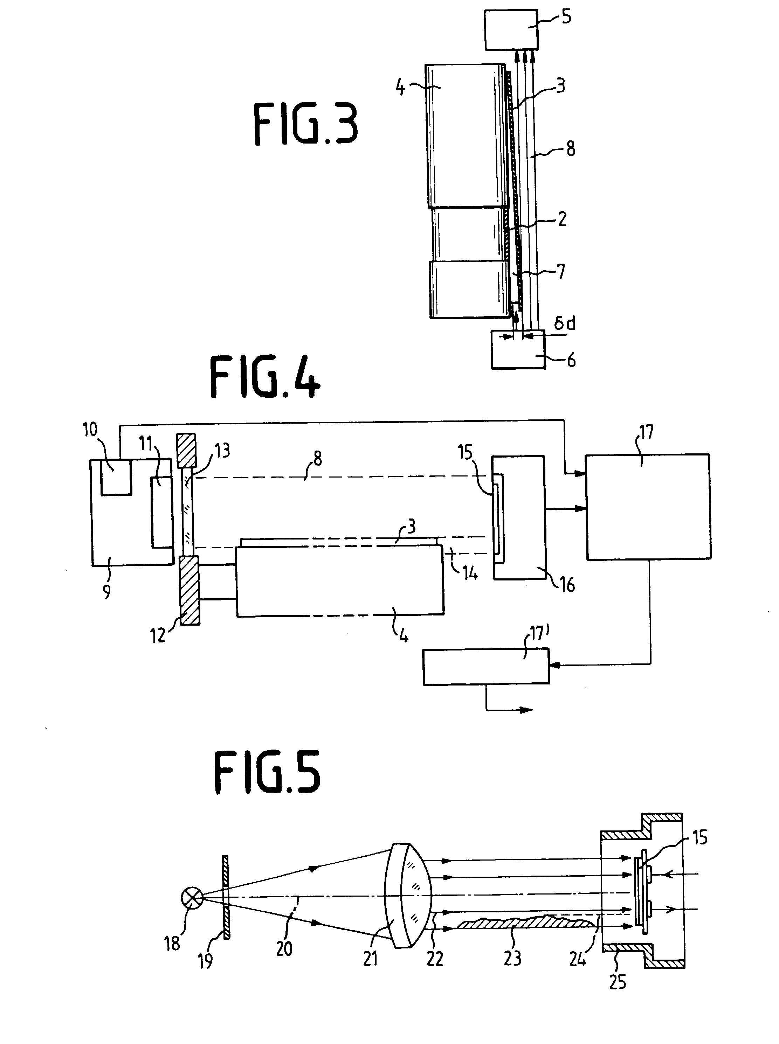

In den Figuren 1 bis 3 ist die Teilansicht des Eingangsteils einer Briefverteilanlage gezeigt. Über ein Deckbandsystem 1 werden die Briefsendungen 7 mit hoher Geschwindigkeit den Riemen 2 und 3 zugeführt. Der vorgespannte elastische Riemen 3 drückt die Sendung 7 an die zylindrische Meß-Rolle 4, wodurch ein Teil $\delta d$ der sich zwischen Empfänger 5 und Sender 6 befindlichen Lichtvorhangs 8 abgedunkelt wird. Dieser abgedunkelte Strahlengang $\delta d$ ist proportional zu der zu messenden Sendungsdicke im Momentzustand. Bei der Vorrichtung nach Figur 1 bis 3 wird das Deckbandsystem mit seinen schmalen Riemen aufgetrennt und die Sendungen in der Dickenmeßeinrichtung durch den schmalen Riemen 2 und den hohen Riemen 3, welche die Sendung 7 gegen die Meßrolle 4 drückt, transportiert. Sendungen mit maximaler Höhe H werden dabei vollständig durch den elastischen Riemen 3 mit der Höhe B eingeschlossen, so daß es nicht zu Fehlmessungen aufgrund abstehender Ecken usw. kommen kann. Um den Einfluß der Dicke des Riemens 2 auf die Dickenmessung auszuschalten, läuft der Riemen 2 über die Meßrolle 4 in einer Nut, deren Tiefe der Riemendicke entspricht (Figur 3). Der Umschlingungswinkel a und die Meßrolle 4 ist so gewählt, daß zum einen die Sendungen an die Meßrolle 4 gedrückt werden, zum anderen durch dicke und steife Sendungen nicht so sehr abgelenkt werden, daß sie den Riemen 3 weiter auslenken als es der Sendungsdicke entspricht und somit große Meßfehler entstehen. Material und Vorspannung des Riemens 3 sind so gewählt, daß ein Minimum an Schwingneigung gewährleistet ist.

Figur 4 zeigt eine Übersichtsdarstellung der Dickenmeß-Vorrichtung, in der 9 eine Beleuchtungseinheit, 10 eine Lampenausfallüberwachung, 11 eine Optik, 12 eine Trägerplatte, die ein Glasfenster zum Staubschutz enthält, 14 die Abschattung des Sensors 15 durch den Riemen 3 und Teilen der Meßrolle 4, 16 Meßkopf und 17 Signaladaption der Auswerteschaltung bezeichnen. Die drei Funktionsblöcke, Beleuchtungseinheit 9, Meßkopf 16 und Signaladaption 17 sind vorteilhafterweise voneinander räumlich getrennt, wobei die Signaladaption 17 zusammen mit einem Mikroprozessor als Auswerteschaltung auf einer Platine untergebracht sein kann. Es ist vorteilhaft, den Meßkopf in einem Gehäuse mit einem Lichtschutztubus mit Schlitzöffnung, die mit einem Glasfenster abgedeckt ist, unterzubringen. Der Tubus verhindert zu starken Fremdlichteinfluß und das Fenster unterbindet das Eindringen von Staub in den Tubus. Die Beleuchtungseinheit 9 ist dem Meßkopf genau gegenüberstehend angeordnet. Die Trägerplatte 12 enthält eine Öffnung, durch die das Lichtbündel 8 hindurchtritt, bevor es auf den Tubus trifft. Diese Öffnung ist durch ein Glasfenster 13 abgedeckt, um die Optik 11 vor Verstaubung zu schützen. Es ist vorteilhaft, beide Fenster bündig in die umgebende Ebene einzulassen, so daß sie ggfs. leicht zu reinigen sind. Die Lampenüberwachung 10 enthält vorzugsweise einen Photosensor, dessen Ausgang wie auch der Ausgang des Meßkopfs 16 der Signaladaption 17 zugeführt werden.

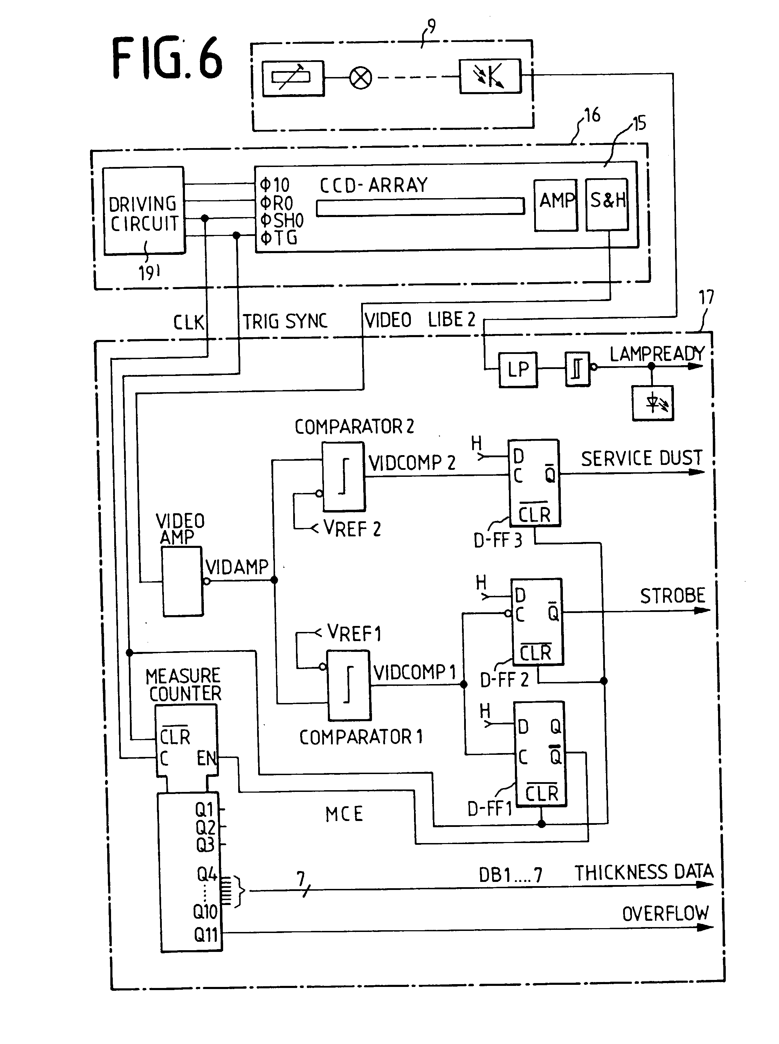

Figur 5 zeigt schematisch den Aufbau des optischen Teils des Systems. Um auch konische Gegenstände ohne Fehler messen zu können, wird von Lampe 18, Lochblende 19 und Collimatoroptik 21 ein entlang der optischen Achse 20 paralleler Lichtvorhang 22 erzeugt. Ein in den parallelen Lichtvorhang eingebrachtes Meßobjekt führt zur einer Abschattung der CCD-Zeile 15, die der Dicke der dicksten Stelle des Meßobjektes entspricht. Fremdlichteinfluß wird durch den Lichtschutz Tubus 25 ausgeschaltet. Als Lampe 18 kann vorteilhaft eine Halogenglühlampe mit 10 Watt verwendet werden. Hierbei sind Form und Durchmesser der Glühwendel für die optischen Eigenschaften des Systems von Bedeutung. Es ist vorteilhaft, eine Glühlampe mit einer dünnen, kompakten Transversal-Wendel in Rundform zu benutzen und den Lichtaustritt mit einer Lochblende zu begrenzen. Dies kommt hier einer idealen Punktlichtquelle am nächsten. Um die räumliche Ausdehnung der Lichtquelle im Verhältnis zur Sensorlänge zu minimieren, damit der Rand der Abschattung möglichst scharf auf dem Sensor 9 abgebildet wird, ist es vorteilhaft, die Lampe so zu orientieren, daß die Wendelachse senkrecht zur Längsachse der CCD-Zeile und senkrecht zur optischen Achse steht und daß der Wendel-Mittelpunkt auf der optischen Achse liegt. Der Collimator ist vorteilhaft als entspiegelter Achromat mit einer sphärischen und chromatischen Abberationskorrektur ausgebildet.

Wesentlich für die Erfindung ist die Verwendung einer CCD-Zeile als Sensor 15. Die generelle Anwendung von CCDs in Bilderzeugungssystemen wird beschrieben im Electronics Engineer's Reference Book, 5th Edition, edited by F. F. Mazda, 31/18-20, Butterworths & Co., 1983. CCDs bestehen aus einer im allgemeinen großen Anzahl von lichtempfindlichen Pixeln, die Ladung in linearer Abhängigkeit von der Intensität des einfallenden Lichtes und der Integrationszeit der CCD akkumulieren. Die Ladung wird taktweise ausgelesen. Wird bei der nach dem erfindungsgemäßen Verfahren arbeitenden Vorrichtung ein Gegenstand in den Lichtweg eingeführt, so wird entsprechend seiner Dicke ein Teil der lichtempfindlichen Fläche der CCD-Zeile abgeschattet, wobei die Anzahl der abgedunkelten Pixel bei einem parallelen Lichtbündel der Dicke des Gegenstands direkt proportional ist, so daß man eine strenge Linearität zwischen der Dicke und dem Signal der CCD-Zeile erhält. Für jedes Pixel der CCD-Zeile können zwei Zustände unterschieden werden: hell oder dunkel. Insofern kann das Verhalten des CCD-Sensors als digital angesehen werden. Das Video-Signal der CCD-Zeile ist daher näherungsweise rechteckförmig, wobei allein das Tastverhältnis die Information über die Pixel-Abschattung bzw. die Dicke des Meßgegenstands enthält. Ein Fremdlichteinfluß bleibt ohne Auswirkung, so lange zwischen dem Hell- und dem Dunkelpegel des Ausgangssignals der CCD-Zeile noch eindeutig unterschieden werden kann. Eine zweite auswertbare Größe stellt der Video-Signalhub der CCD-Zeile dar. Er ist abhängig von der Beleuchtungsstärke der Zeilenoberfläche und der Intensität der Lichtquelle und erlaubt eine Aussage über den Verstaubungsgrad der Meßstrecke bzw. eine eventuellen Intensitätsnachlaß der Lichtquelle. Eine Vorauswertung des von der CCD-Zeile **15** abgegebenen Video-Signals erfolgt in der Signal-Adaption **17**, die den Dicken-Meßwert als digitales Signal einem Mikroprozessor **17'** zur Verfügung stellt.

Im folgenden wird anhand des Blockschaltbilds Figur 6 die Gewinnung der digitalen Meßdaten beschrieben. Die Ansteuerung **19** erzeugt die Signale φ10 (Shift Register Clock), φR0 (Reset Gate Clock), φSHO (Sample & Hold Clock) und φTG (Transfer Gate Clock).

Das Signal CLK ist der Pixeltakt der CCD-Zeile (1.25 MHz). Die Meßrate (Meßzylus) ist vorgegeben durch die Integrationszeit der CCD-Zeile.

Das Zeitbestimmende Signal hierzu ist φTG.

Die Signale φSHO und φTG werden für das Timing der Vorverarbeitung **17** benutzt. Dort wird φSHO "CLK" (Clock), und φTG, weil es die Periodendauer eines Meßvorgangs hat, "TRIG SYNC" (Trigger Synchronisation) genannt.

Der Ausgang des Meßkopfes **16** liefert das rechteckähnliche analoge Video-Signal VIDEO der CCD-Zeile, dessen Tastverhältnis die Dickeninformation enthält. Der Hub des Video-Signales enthält die Information über die auf den Sensor fallende Lichtmenge. VIDEO gelangt ebenfalls in den Block Vorverarbeitung **17**.

In der Vorverarbeitung **17** erfolgt die Signalverarbeitung derart, daß aus dem Video-Signal ein Digitalwort für den jeweiligen Dicken-Meßwert erzeugt wird, welches nebst diversen digitalen Hilfssignalen der Schnittstelle dem Microprozessor **18** zugeführt wird.

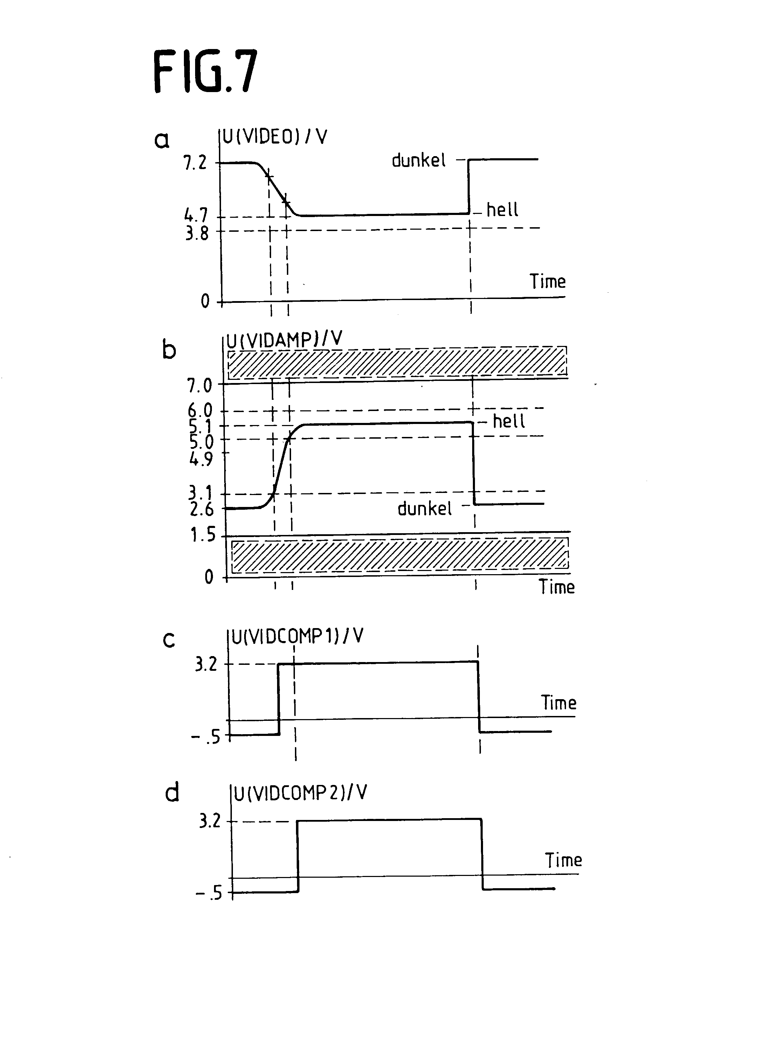

In der Vorverarbeitung **17** wird das Video-Signal invertiert, verstärkt, gefiltert und der DC-Offset-Anteil des Signals abgesenkt. Man erhält das Signal VIDAMP. Dieses wird zwei Komparatoren zugeführt, die daraus jeweils ein TTL-Signal formen. Fig. 7 zeigt die Signalverarbeitung im analogen Teil der Vorverarbeitung **17**, insbesondere die Einstellung der Schaltschwellen der Komparatoren. Die Schaltschwelle von Komparator 1 wird mit der Referenzspannung $V_{REF1}$ so eingestellt, daß sie knapp unter dem Maximalpegel von VIDEO bzw. knapp über dem Minimalpegel von VIDAMP liegt.

Die Schaltschwelle von Komparator 2 wird mit der Referenzspannung $V_{REF2}$ so eingestellt, daß sie knapp über dem Minimalpegel von VIDEO bzw. knapp unter dem Maximalpegel von VIDAMP liegt.

Der Ausgang von Komparator 1 (VIDCOMP1) geht einerseits an den Clock-Eingang des Flip-Flop D-FF 1 und andererseits invertiert an D-FF 2.

Der invertierende Ausgang von D-FF 1 geht an den Enable-Eingang des kaskadierten 11-bit-Zählers MC (Measure Counter) und steuert den Zählvorgang durch das Signal MCE (= Measure Count Enable).

Der invertierende Ausgang von D-FF 2 heißt STROBE und stellt den Interrupt für die Meßwert-Übernahme in den Prozessor **18** dar.

Der Ausgang von Komparator 2 (VIDCOMP2) gelangt an D-FF 3;

dessen invertierender Ausgang nennt sich SERVICE DUST.

Die D-Eingänge aller drei D-FFs liegen auf HIGH.

Von den insgesamt 11 Bit des Zählers werden für den Meßdatenbus 7 Bit zuzüglich einem Bit OVERFLOW zur Anzeige einer Meßbereichsüberschreitung genutzt.

Die Taktansteuerung des Zählers geschieht mittels CLK.

Als Reset für den Zähler und die Flip-Flops dient TRIG SYNC.

Zu Beginn eines Meßzyklus geht TRIG SYNC kurzzeitig auf LOW;

wodurch alle D-FFs und der Meß-Zähler zurückgesetzt werden. Danach fängt der Zähler an zu zählen.

Sobald der Pegel von VIDEO vom Dunkel- in den Hell-Zustand übergeht (fallende Flanke von VIDEO bzw. steigende Flanke von VIDAMP), geht VIDCOMP1 auf HIGH und der invertierende Ausgang von D-FF 1 auf LOW. Somit stoppt der Zählvorgang, wobei der Zählerstand bis zum Ende des Meßzyklus (nächster Reset-Impuls) durch TRIG SYNC gehalten wird.

Mit der steigenden Flanke von Video (Übergang vom Hell- in den Dunkel-Zustand bzw. letztes Pixel) geht VIDCOMP1 wieder auf LOW. Der Zustand am Ausgang von D-FF 1 ändert sich nicht. Jedoch erhält jetzt der Clock-Eingang von D-FF 2 eine positive Flanke, wodurch STROBE auf LOW geht und einen Interrupt bewirkt. Der nachfolgende Prozessor übernimmt anschließend die Meß-Daten und das Signal OVERFLOW.

Nach der steigenden Flanke von VIDEO bleibt dieses mindestens bis zum nächsten Reset auf HIGH.

Der Erscheinungszeitpunkt der fallenden Flanke von VIDEO nach einem Reset hängt von der Abschattung des Sensors - also auch von der Sendungsdicke ab. Da der Zählvorgang unmittelbar mit dieser Flanke gestoppt wird, ist der Zusammenhang zwischen Flanke und Zählerstand linear.

SERVICE DUST schaltet ebenfalls auf LOW, sobald die fallende Flanke von VIDEO Spannungsmäßig $V_{REF2}$ unterschreitet.

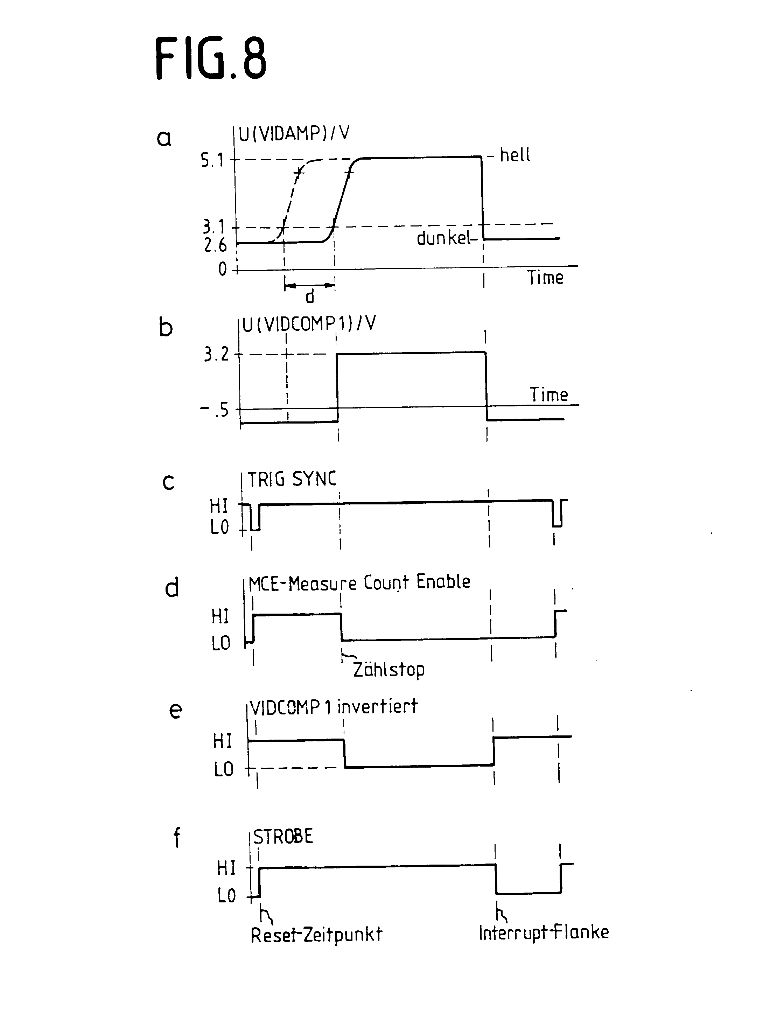

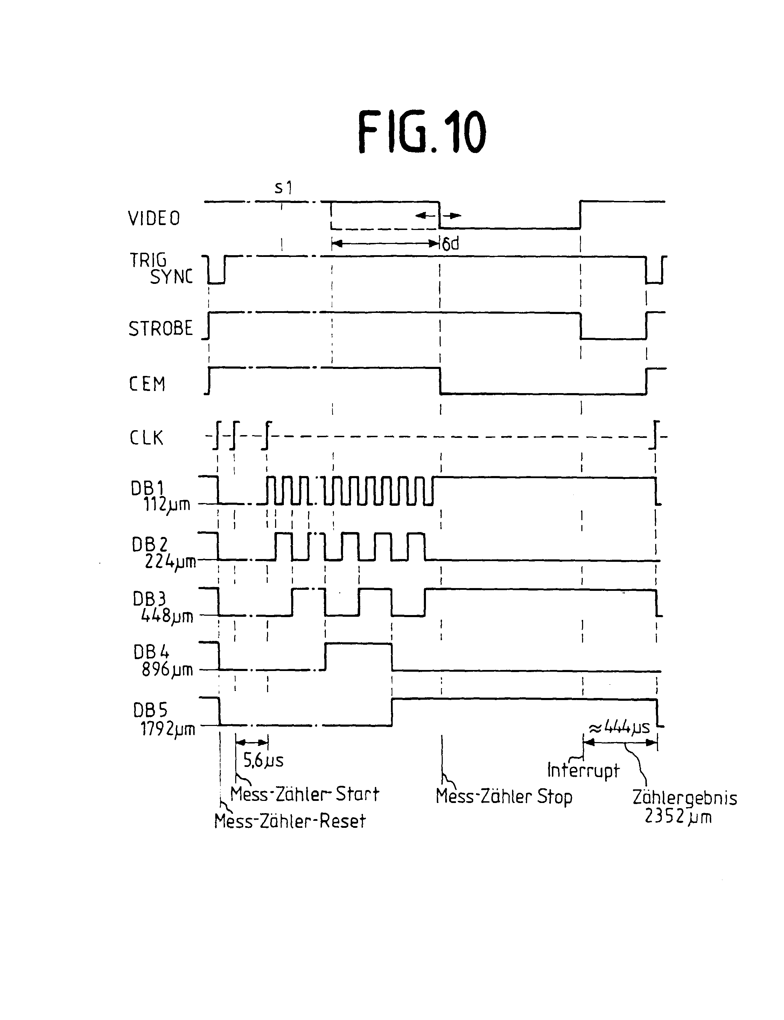

Die Steuerung des Meß-Zählers und Erzeugung von STROBE zeigt Figur 8 für eine Sendung der Dicke d.

Das Signal TRIG SYNC dient als Reset für den Meß-Zähler.

Mit einem negativen Impuls von TRIG SYNC wird die Schaltung initialisiert. Sobald TRIG SYNC auf HIGH ist und die erste steigende Flanke des Video-Taktes CLK erscheint, fängt die kaskadierte Zählerkombination an zu zählen. Dieser Meß-Zähler zählt die Anzahl der verdunkelten Pixel der CCD-Zeile.

Die Periodendauer von CLK entspricht der Integrationszeit eines einzelnen Pixels.

Der Zählerstand des Meß-Zählers verhält sich linear zur dickenabhängigen Verschiebung der fallenden Flanke von VIDEO.

Allerdings ist diese Kennlinie keine Ursprungsgerade, da nach dem Reset bis zum ersten gültigen Pixel bereits einige Impulse gezählt werden und somit ein konstanter Offset entsteht.

Dies ist jedoch ohne Bedeutung, da z. B. in größeren Sendungslücken zwecks Selbsteichung ohnehin Referenz-Messungen gemacht werden.

Sobald die fallende Flanke von VIDEO erscheint, stoppt der Meß-Zähler den Zählvorgang für den Rest des Meß-Zyklus, da das Signal MCE von HIGH auf LOW geht.

Die erreichbare Meßwert-Auflösung läßt sich wie folgt ermitteln:

$$a = x * 2^{n-1}$$

a = Auflösung in mm

n = 4, 5, ..., 10 (Zählstufe)

x = Pixelgröße der CCD-Zeile in µm

Größe eines Pixel-"Blockes"

Mit 11 Zählstufen und x = 14 µm liegt die Meßwert-Auflösung demnach zwischen 14 µm und 14.336 mm bei einer Länge der CCD-Zeile von 1024 Pixeln. Innerhalb dieser Grenzen kann man je nach Bedarf festlegen:

- Breite des Meßdaten-Busses
- Meßwert-Auflösung
- Meßwert-Überschreitungsgrenze (Overflow)

Für die Auswertung gemäß dem Ausführungsbeispiel werden nur 7 bit als Datenbits (DB1 bis DB7) und ein weiteres für das Meßwertüberlauf-Signal OVERFLOW benötigt. Da das Daten-Wort mit DB1 an der vierten Zählstufe des Meß-Zählers beginnt, erhält man eine Zusammenfassung von je 8 Pixel der CCD-Zeile zu einem Block bzw. eine Meßwert-Auflösung von 112 µm (x = 14).

Ein Interrupt (fallende Flanke des Signals STROBE) zeigt dem Prozessor **18** in der Meßdaten-Auswertung an, daß die Daten zur Weiterverarbeitung bereitstehen.

Im folgenden wird eine Ausführungsvariante des erfindungsgemäßen Verfahrens anhand der Arbeitsweise des in den Figuren 1 bis 8 dargestellten Ausführungsbeispiels einer erfindungsgemäßen Vorrichtung erläutert. Die zu messende Sendung **7** wird über das Deckbandsystem **1** mit einer Geschwindigkeit VT in den Bereich der Riemen **2** und **3** transportiert und dabei durch den vorgespannten Riemen 3 gegen die Meßrolle 4 gedrückt (Figur 1). Es ist dabei vorteilhaft, den Riemen 2 in einer Nut zu führen, um seinen Einfluß auf die Dickenmessung auszuschalten (Figur 3). Sobald die Sendung in den Bereich des parallelen Lichtvorhangs 8, 22 gelangt, führt dies zu einer Abschattung von Pixeln der CCD-Zeile 15. Diese Abschattung ist proportional der Dicke des Teils der Sendung, der gerade in den Lichtvorhang eingetreten ist und resultiert in einer dickenabhängigen Verschiebung der Flanke des Videosignals gegenüber dem Videosignal, das man erhält, solange sich keine Sendung im Lichtvorhang befindet (Figur 8a). Die Meßvorrichtung so auszugestalten, daß eine gewisse Anzahl von Pixeln der CCD-Zeile, wenn sich keine Sendung im Lichtvorhang befindet, durch Transportelemente wie die Meßrolle 4 und Riemen 3 permanent abgeschattet wird (Figur 4). Dieser Dicken-Offset gibt ein Referenz-Signal für Dickenmessung, wie in Figur 8a dargestellt.

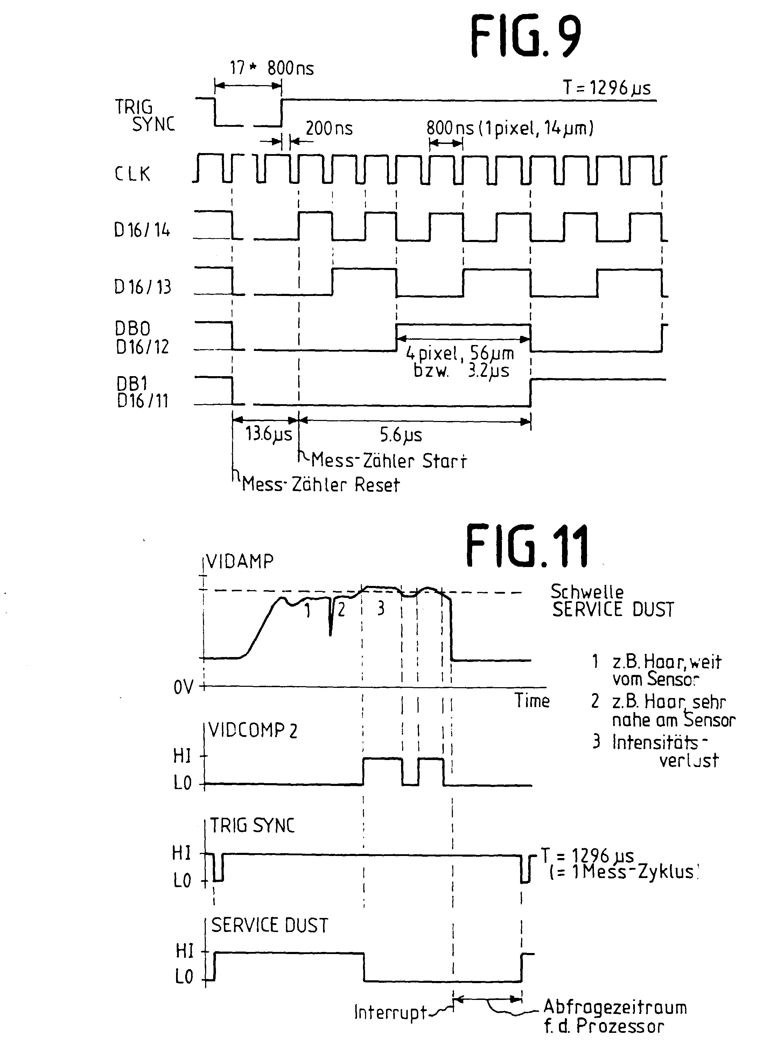

Anhand der Figuren 9 und 10 wird die Gewinnung eines digitalen Meßwerts für eine Sendung der Dicke δd aus dem analogen Video-Signal bei vorgegebenem Dicken-Offset erläutert. Figur 9 zeigt das Timing am Meß-Zähler für die ersten vier Zählstufen.

Geht TRIG SYNC auf LOW, wird mit der nächsten steigenden Flanke von CLK ein Reset am Meß-Zähler wirksam. Alle Zählstufen werden dabei auf Null gesetzt.

Geht TRIG SYNC auf HIGH, geht die erste Zählstufe des Meß-Zählers mit der nächsten steigenden Flanke von CLK auf HIGH, womit für diesen neuen Meß-Zyklus auch ein neuer Zählvorgang beginnt. Das erste Datenbit (DB1) für die Auswertung geht daher erstmals insgesamt 6 µs nach der steigenden Flanke von TRIG SYNC bzw. 19.2 µm nach dem Reset des Meß-Zählers auf HIGH (= 5.6 µm nach Start). Jeweils die halbe Periodendauer einer Zählstufe repräsentiert die entsprechende Auflösung a. Für DB1 gilt a = 112 µm für x = 14.

Eine Übersicht gibt die folgende Tabelle für eine CCD-Zeile mit 1024 Pixeln à 14 µm und einer Datenrate von 1.25 Mhz.

| Zählstufe | | Auflösung | | erstmals HIGH in µs | Anzahl der CLK-Cycles | entspricht theor. µm |
|---|---|---|---|---|---|---|
| n | Datenbit | ½T/µs | µm | nach Start | nach Start | nach Start |
| Q1 | – | 0.8 | 14 | 0 | 0 | 0 |
| Q2 | – | 1.6 | 28 | 0.8 | 1 | 14 |
| Q3 | (DB0) | 3.2 | 56 | 2.4 | 3 | 42 |
| Q4 | DB1 | 6.4 | 112 | 5.6 | 7 | 98 |
| Q5 | DB2 | 12.8 | 224 | 12.0 | 15 | 210 |
| Q6 | DB3 | 25.6 | 448 | 24.8 | 31 | 434 |
| Q7 | DB4 | 51.2 | 896 | 50.4 | 63 | 882 |
| Q8 | DB5 | 102.4 | 1792 | 101.6 | 127 | 1778 |
| Q9 | DB6 | 204.8 | 3584 | 204.0 | 255 | 3570 |
| Q10 | DB7 | 409.6 | 7168 | 408.8 | 511 | 7154 |
| Q11 | OVERFLOW | 819.2 | 14336 | 818.4 | 1023 | 14322 |

Die Scan-Zeit für die 1024 Pixel beträgt 819.2 µs Geht OVER-FLOW nach 818.4 µs auf HIGH, wurden 1000 Bildpixel (14 mm) dunkelgetastet (nicht 1023 Bildpixel), da zwischen Zähler-Start und erstem Bildpixel S1 die Zeit von ca. 19 µs liegt.

Die Integrationszeit T = 1296 µs entspricht 1620 CLK-Cycles. Figur 10 zeigt schematisch die Umsetzung der Meßflanken-Verschiebung des Videosignals in ein Meß-Zähler-Ergebnis.

Von der aktiven Fläche der CCD-Zeile in diesem Beispiel werden ca. 2 mm (Bildpixel S1 bis ca. S143) permanent abgeschattet. Daraus erhält man einen Dicken-Offset von DB1 + DB4 = 1.008 mm. Die Differenz aus Dickenmeßwert und Dicken-Offset ergibt die tatsächliche Dicke an der entsprechenden Stelle der Sendung von δd = 1344 µm.

Das Signal SERVICE DUST am invertierenden Ausgang von D-FF3 in Figur 6 macht eine Aussage darüber, ob der Lichtweg verstaubt ist oder aus anderen Gründen zuwenig Licht auf den Sensor fällt. Ist nämlich der Hub von VIDEO über die gesamte Länge des Sensors zu niedrig, dann bleibt SERVICE DUST auf HIGH. Das Signal SERVICE DUST wird ähnlich wie das Count Enable des Meß-Zählers MCE aus VIDEO abgeleitet. Die Ansprech-Schwelle wird jedoch durch $V_{REF2}$ bestimmt. Figur 11 zeigt das Verhalten von SERVICE DUST für den Fall ungleichmäßiger Verstaubung und geringer Intensitätsverminderung der Beleuchtung. In VIDAMP ist eine negative Spitze zu sehen, die z. B. durch ein sehr nahe am Sensor haftendes Haar hervorgerufen werden könnte. Der Meß-Zähler wird dadurch auch nicht mehr weiterzählen, selbst dann nicht, wenn die Spitze $V_{REF1}$ unterschreitet, da D-FF1 seinen Zustand bis zum Zyklusende beibehält. Daher ist ein bedeutsamer Einfluß einer solchen Spitze auf den Meßwert nicht gegeben. Liegt das Signal VIDAMP komplett unter der Ansprech-Schwelle, dann bleibt SERVICE DUST auf HIGH. In diesem Fall meldet der Prozessor 17, daß eine Wartung des Lichtvorhangs bzw. der Optik erforderlich ist. Die Abfrage von SERVICE DUST erfolgt beim Start oder in Sendungslücken, wenn sich keine Sendung in der Meßstrecke befindet. Der Abfragezeitpunkt des Prozessors **17** nach SERVICE DUST liegt zwischen der Interrupt-Flanke und der negativen Flanke von TRIG SYNC, siehe Figur 11.

In einer Briefverteilanlage wird das erfindungsgemäße Meßverfahren und eine nach diesem Verfahren arbeitende Vorrichtung folgenderweise verwendet. Die Dicken-Meßvorrichtung befindet sich in Brieflaufrichtung gesehen in einem geeigneten Abstand vor einer Überlappungseinrichtung, damit eine der folgenden Operationen ausgeführt werden kann:

- Sendung wird ausgeschleust in ein Reject-Fach

$$(D > D_{max})$$

- zwei Sendungen werden überlappt

$$(D1 + D2 \leq D_{max})$$

- Sendungen werden nicht überlappt, zweite Sendung geht in ein Überlauffach

$$(D1 + D2 > D_{max})$$

Hierbei bezeichnet $D_{max}$ die vorgegebene maximale Dicke einer Sendung und D, D1, D2 die jeweiligen gemessenen Sendungsdicken.

Um die Maximaldicke einer Sendung zu bestimmen, wird bei einer Sendung über ihre gesamte Länge jeweils in einem bestimmten Abstand eine Dickenmessung vorgenommen Die maximale Meßrate ist aber vorgegeben durch die Integrationszeit der CCD-Zeile. Bei einer Integrationszeit von 1296 µs erhält man bei einer Sendung, die mit 2,9 m/s durch den Meßstrahl geführt wird, alle 3,76 mm einen Dicken-Meßwert (Auflösung in Transportrichtung der Sendung). Um bei einer Erhöhung der Transportgeschwindigkeit der Sendung die Auflösung in Transportrichtung beizubehalten, ist die Integrationszeit der CCD-Zeile entsprechend zu verkürzen.

Um mechanische Toleranzen und langsame Veränderungen der Transport- und Meßein richtung auszugleichen, ist bei dem erfindungsgemäßen Verfahren eine dynamische Null punkt-Eichung vorgesehen. Die Normierwerte werden aus einem Dicken-Offset der Transport- und Meßeinrichtung ermittelt und der Eichungsvorgang prozeßgesteuert wiederholt. Eine Eichung findet nur statt, wenn sich keine Sendung in der Dickenmeß-Vorrichtung befindet, also z. B. beim Start und in der Zeit zwischen größeren Sendungslücken. Die Normierwert-Erfassung beginnt, sobald die Dickenwert-Ausgabe für eine bestimmte Sendung abgeschlossen ist. Dabei werden Meßwerte für eine bestimmte vorgegebene Zeit erfaßt. Der Eichungsvorgang wird abgebrochen, wenn während dieser Zeit eine neue Sendung zur Dickenmessung ansteht. Dies kann z. B. dadurch bewirkt werden, daß die Vorderkante dieser Sendung eine Lichtschranke, die auch zum Starten der Dickenmeß-Vorrichtung verwendet wird, erreicht. Werden Meßwerte während einer Zeit, die größer oder gleich der vorgegebenen Zeit ist, aufgenommen, so ist die Meßreihe gültig. Aus den Daten der Meßreihe werden größter und kleinster Wert bestimmt. Die Differenz aus diesen Werten muß kleiner als ein vorgegebener Wert sein, sonst erfolgt eine Fehlermeldung. Diese kann ein Hinweis auf ein zu hohes Schwingverhalten oder auf eine Verschmutzung der Transport- und Meßeinrichtung darstellen. Der größte Wert aus der Meßreihe wird als neuer Eichwert verwendet. Es ist vorteilhaft, die für die Eichung erforderlichen Parameter in einem EPROM abzulegen. Verwendet man eine Transport und Meßeinrichtung wie in Figur 1 dargestellt, ist es vorteilhaft, die Meßzeit für die Eichung so zu wählen, daß gewährleistet ist, daß der gesamte Umfang des Riemens **3** von der Eichmessung erfaßt wird.

Nach dem erfindungsgemäßen Verfahren wird zur Messung der Dicke einer Sendung der absolute Maximalwert des aus der Umsetzung der Videomeßflanken-Verschiebung erhaltenen Zählerergebnisse für die gesamte Länge der Sendung herangezogen. Von diesem Wert wird der Eichwert subtrahiert, um den tatsächlichen Dickenwert der Sendung zu erhalten.

**Patentansprüche**

1. Verfahren zur berührungslosen Dickenmessung von flachen, durchlaufenden Gegenständen, insbesondere in Briefverteilungsanlagen, bei dem die zu vermessenden Gegenstände im wesentlichen parallel zu ihrer flachen Seite und senkrecht zur Durchlaufrichtung in ein Band paralleler Lichtstrahlen zwischen einem Lichtsender und einer CCD-Zeile als Lichtempfänger eingebracht werden und aus der von den Gegenständen jeweils erzeugten Verschattung der lichtempfindlichen Fläche der CCD-Zeile über das Hell-Dunkel-Tastverhältnis des CCD-Videosignals die Dicke des jeweils zu vermessenden Gegenstandes ermittelt wird, dadurch gekennzeichnet, daß eine bestimmte Anzahl von Pixeln der CCD-Zeile (15) durch Transportelemente für die Gegenstände, wie Meßrolle (4) und umlaufender Riemen (3) abgeschattet wird, und das Meßsignal dieses Dicken-Offsets als Normierwert für eine dynamische Nullpunkt-Kalibrierung mit n Messungen verwendet wird, die jeweils während der Zeit stattfinden, in der sich kein Gegenstand in der Meßvorrichtung befindet.

2.  Verfahren nach Anspruch 1, dadurch gekennzeichnet, daß neben dem Hell-Dunkel-Tastverhältnis des Video-Signals der Video-Signalhub der CCD-Zeile gemessen und bei Unterschreitung einer wählbaren Lichtstärkenschwelle ein Fehlersignal ausgegeben wird.

3.  Verfahren nach Anspruch 1, dadurch gekennzeichnet, daß die Gesamtzeit für die n Messungen der dynamischen Kalibrierung mindestens der Umlaufzeit des Riemens (3) entspricht.

4.  Verfahren nach Anspruch 1 und 3, dadurch gekennzeichnet, daß bei Erreichen einer vorgegebenen maximalen Differenz zwischen kleinstem und größtem Meßwert der n Messungen für jeweils eine dynamische Kalibrierung eine Fehlermeldung ausgegeben wird.

## Claims

1.  Method for contactless thickness measurement of flat, moving objects, especially in letter sorting installations, in which the objects to be measured are introduced substantially parallelly to their flat sides and perpendicularly to the throughflow direction into a band of parallel light beams between a light emitter and a CCD cell as light receiver and the thickness of each object to be measured is ascertained from the shading, which is produced each time by the objects, of the light-sensitive surface of the CCD cell by way of the brightness-to-darkness keying ratio of the CCD video signal, characterised thereby that a determined number of pixels of the CCD cell (15) is shaded by transport elements for the objects, such as measuring rollers (4) and circulating belts (3), and the measurement signal of this thickness offset is used as normalised value for a dynamic zero point calibration by n measurements, which take place during the time in which no object is disposed in the measuring device.

2.  Method according to claim 1, characterised thereby that, apart from the brightness-to-darkness keying ratio of the video signal the rise of the video signal of the CCD cell is measured and an error signal is issued in the case of exceeding of a selectable light intensity threshold.

3.  Method according to claim 1, characterised thereby that the total time for the n measurements of the dynamic calilbration corresponds to at least the circulation time of the belt (3).

4.  Method according to claim 1 and 3, characterised thereby that an error report is issued in the case of attainment of a preset maximum difference between smallest and largest measurement value of the n measurements for each respective calibration.

## Revendications

1.  Procédé de mesure d'épaisseur sans contact d'objets plats, se déplaçant, en particulier dans des installations de répartition du courrier, selon lequel les objets à mesurer sont introduits sensiblement parallèlement à leur côté plat et perpendiculairement à la direction de défilement dans une bande de rayons lumineux parallèles entre un émetteur de lumière et une ligne CCD en tant que récepteur de lumière et à partir de l'obscurcissement créé par les objets de la surface photosensible de la ligne CCD, l'épaisseur de l'objet à mesurer est détectée par le rapport cyclique clarté-obscurité du signal vidéo CCD, caractérisé par le fait qu'un nombre déterminé d'éléments d'image de la ligne CCD (15) est masqué par des éléments de transport pour les objets, tels qu'un rouleau de mesure (4) et une courroie de circulation (3), et le signal de mesure de ce décalage d'épaisseur est utilisé en tant que valeur étalonnée pour un calibrage dynamique de 0 avec n mesures qui sont effectuées pendant le temps durant lequel aucun objet ne se trouve dans le dispositif de mesure.

2.  Procédé selon la revendication 1, caractérisé en ce qu'en plus du rapport cyclique clarté-obscurité du signal vidéo, l'excursion de signal vidéo de la ligne CCD est mesurée et dans le cas d'un passage au-dessous d'un seuil d'intensité lumineuse pouvant être choisi, un signal d'erreur est délivré.

3. Procédé selon la revendication 1, caractérisé en ce que le temps total pour les n mesures du calibrage dynamique correspond au moins au temps de révolution de la courroie (3).

4. Procédé selon les revendications 1 et 3, caractérisé en ce que lorsqu'une différence maximale prédéterminée est atteinte entre la valeur de mesure la plus faible et la valeur de mesure la plus élevée des n mesures pour un calibrage dynamique, une signalisation d'erreur est délivrée.

# FIG.1

# FIG.2

FIG.3

FIG.4

FIG.5

# FIG.6

# FIG.7

# FIG.8

# FIG.10

# FIG.9

17 * 800 ns

T = 1296 µs

TRIG
SYNC

200 ns

800 ns (1 pixel, 14 µm)

CLK

D 16 / 14

D 16 / 13

DB0
D 16/12

4 pixel, 56 µm
bzw. 3.2 µs

DB1
D 16 /11

13.6 µs

5.6 µs

Mess-Zähler Start

Mess-Zähler Reset

# FIG.11

VIDAMP

Schwelle
SERVICE DUST

1  2  3

1  z.B. Haar, weit
   vom Sensor

0V

Time

2  z.B. Haar, sehr
   nahe am Sensor

VIDCOMP 2

3  Intensitätsverlust

HI

LO

TRIG SYNC

HI

T = 1296 µs
(= 1 Mess-Zyklus)

LO

SERVICE DUST

HI

LO

Interrupt

Abfragezeitraum
f. d. Prozessor

16